# EUROPEAN PATENT APPLICATION

(11) **EP 4 660 906 A1**
(43) Date of publication of application: **10.12.2025**
(21) Application number: 24180072.1
(22) Date of filing: 05.06.2024
(51) Int. Cl.: G06Q 10/04, G06Q 10/20, G06Q 10/101

(54) **SYSTEM AND METHOD FOR INTEROPERABILITY BY MANAGING LIFECYCLE OF AN INSTANTIATED VIRTUAL WORLD IN A COMPUTER SIMULATED ENVIRONMENT**

(71) Applicant: Siemens Aktiengesellschaft, 80333 München (DE)
(72) Inventor: MANICKAM, Ramesh, 560100 Bangalore, Karnataka (IN)
(74) Representative: HKW Intellectual Property PartG mbB

(57) **Abstract**

Presented is a computer-implemented system and method for managing a plurality of virtual environments in a computer-simulated environment. The method comprises generating a Factual Virtual World (FVW) configured to accurately represent real-world objects, synchronized in real-time with the Real World (RW) using digital shadowing. The method further includes generating an Instantiated Virtual World (IVW) based on the FVW at a specific instant of time, wherein the IVW is capable of being modified, simulated, archived, and deleted independently of the FVW. Additionally, the method involves controlling a relationship between the FVW and multiple IVWs, wherein the FVW mimics one or more properties of the RW, and each IVW serves as an instance created for a specific objective and within a specific time-period. The method also includes displaying each IVW and the FVW on a user interface within the computer-simulated environment, utilizing at least one visualization method.

## Description

The present invention relates generally to the field of virtual environments, and specifically to methods and systems for managing and organizing virtual worlds interoperability within an industrial context.

The Industrial Metaverse represents a virtual environment that synchronizes in real-time with the physical world. Unlike conventional factual world settings, which are often fully developed at inception, virtual worlds evolve progressively, being updated continuously based on specific use cases and problems that arise. An illustrative example is the digital twin of a factory integrated into a metaverse platform, where multiple users can interact in real-time. However, several significant challenges need to be addressed to ensure efficient and effective management of these virtual environments. For specific use cases, such as real-time collaboration between a maintenance technician and a domain expert to solve a real-world problem, it is necessary to create a new version of the virtual world. This process often results in the creation of a "world within a world." Currently, there is a lack of documentation and clarity regarding the initiation, purpose, and integration of these nested virtual worlds, leading to inefficiencies and confusion.

Modifications made within the virtual world do not automatically reflect in the real world, except in scenarios involving remote operations. The virtual world maintains real-time synchronization with the real world through digital shadowing. However, the existence of multiple virtual representations of the same real-world entity, without a unified reference, leads to fragmentation and inconsistency in data representation.

Multiple virtual worlds are often created by different users for the same real-world entity, each tailored to specific use cases. This results in numerous interconnected or isolated virtual instances, highlighting the absence of a comprehensive system for managing the creation, modification, sharing, and archiving of virtual worlds throughout their lifecycle.

The IMV encompasses the entire lifecycle of assets and infrastructure, from requirement gathering and concept ideation to design, engineering, testing, production, operations, service, and end-of-life. At each stage, various issues arise, necessitating multiple solutions within the same virtual world. Managing the initiation and resolution of problems within these dynamic virtual environments involves multiple users and contexts, presenting a complex "system of systems" challenge.

A critical aspect of the metaverse is the ability for different virtual worlds and platforms to interact seamlessly. Users in one virtual world must be able to communicate, share data, and exchange content with users in another. Given the diverse use cases and varying applications of the same asset across different virtual worlds, ensuring smooth interoperability, tracking, versioning, and updating of data is exceedingly complex. Achieving a cohesive experience in the interconnected metaverse environment remains a formidable challenge.

The present invention seeks to address these challenges by providing innovative methods and systems for effectively managing and organizing virtual environments within the Industrial Metaverse. The invention focuses on solutions for version control, real-time synchronization, multi-world management, lifecycle integration, and interoperability, thereby unlocking the full potential of the IMV as a transformative tool in industrial applications. Therefore, the object of the present invention is achieved by a method for managing and organizing virtual environments, as disclosed herein.

The method comprises of generating a Factual Virtual World (FVW) configured to accurately represent real-world objects, synchronized in real-time with the Real World (RW) using digital shadowing. The method further comprises of generating an Instantiated Virtual World (IVW) based on the FVW at a specific instant of time, wherein the IVW is capable of being modified, simulated, archived, and deleted independent of the FVW. Furthermore, the method comprises of controlling a relationship between the FVW and a plurality of. IVWs, wherein the FVW mimics one or more properties of the RW, and each IVW is an instance with a specific objective and a specific time period. The method further comprises of displaying the each IVW and FVW on a user interface in the computer simulated environment using at least one of a visualization method of a plurality of visualization method. Advantageously, the method provides flexibility in managing virtual environments. By generating an Instantiated Virtual World (IVW) based on the Factual Virtual World (FVW), users can manipulate, simulate, archive, and delete IVWs independently of the FVW.

The step of optimizing interaction steps further comprises of the digital shadowing of the FVW achieved using Internet of Things (IoT) data from a plurality of sensors to ensure real-time synchronization with the RW. An advantage of utilizing Internet of Things (IoT) data from a variety of sensors for digital shadowing of the Factual Virtual World (FVW) is the attainment of real-time synchronization with the Real World (RW).

The step of the generating a plurality of visualization method comprising implementing a breadcrumb visualization method that highlights each of an active IVW and provides a visual representation of archived IVW of the plurality of the IVW, wherein the breadcrumb visualization method uses a combination of highlight lines and rectangular blocks to indicate active and archived IVWs, respectively.

Advantageously, the step results in enhanced user navigation and context awareness within the virtual environment. By highlighting each active Instantiated Virtual World (IVW) and visually representing archived IVWs using a combination of highlight lines and rectangular blocks, users can easily discern their current location and explore past instances. This aids in streamlining user interactions, facilitating efficient navigation between different IVWs, and providing a clear visual representation of the virtual environment's history.

The step of the generating the plurality of visualization method further comprising a tree structure visualization method configured to show the hierarchical formation of IVWs based on their creation times, wherein the tree structure visualization method provides a chronological hierarchy of IVWs, allowing users to navigate through different instances based on their creation times. Advantageously, the tree structure visualization method improves organization and navigation within the virtual environment as the user gains a chronological perspective of the virtual environment's evolution.

The step of ensuring data interoperability between the FVW and IVWs, wherein the data interoperability is associated with flow of data being unidirectional, and wherein the data interoperability further comprises of a control over sharing and modification of IVWs based on a specific information. The step of interoperability further includes a data flow being a traceability chain of events comprising a plurality of changes from the FVW to monitor changes made by various personas for the IVW. Advantageously, the flow of information from one VW to the other VW, share the same information since it was created at that instance, thereby, saving enormous amount of time in the way the information is flowing from one IMV to the other IMV.

The step of the generation of IVWs, further comprising IVWs that can be accessed through multiple entry points, allowing users to enter the virtual environment either through the FVW or directly into a specific IVW and each IVW can be archived upon completion of its objective, with archived instances remain accessible for future reference or reactivation. Advantageously allowing IVWs to be accessed through multiple entry points results in enhanced flexibility and accessibility for users. Additionally, the ability to archive IVWs upon completion of their objectives ensures efficient organization and management of virtual resources.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

Throughout the present disclosure, the term "computed simulated environment" or "virtual environments" as used herein refers to three-dimensional (3D) representation of a real or physical world. It can be understood as a virtual environment. The computer-simulated environment is accessible by a user, i.e., it is accessible from the real/physical world. This comprises data exchange between the computer-simulated environment and the real/physical world. In particular, the computer-simulated environment can be understood as the "metaverse" and "industrial metaverse", "digital twin" or "computer simulated environment" may be interchangeably used in the present invention. It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

Throughout the present invention, it is to be understood that the terms "one or more actions" and "interaction" or "interaction steps" are utilized interchangeably to depict a series of actions that are taken to complete an intent. For example: when someone knocks at the door, the intention is to know who is knocking. To complete the intention the user or an avatar in a computer simulated environment needs to get up from his chair, walk, see the eye lid in the door or enquire about the person on the door.

The term "Real World" refers to the physical world or the natural world. In the Real World, events occur naturally and phenomena are governed by physical laws, scientific principles, and observable patterns. Interactions in the Real World are complex and interconnected.

The term "Virtual World" refers to a simulated digital environment that is created to mimic reality. Within the Virtual World, users can interact with the environment and participate in real-time interactions. Users, represented as avatars, can navigate the Virtual World, manipulate objects, engage in activities, communicate with others, and create or modify the Virtual World itself.

In the context of a Virtual World environment, "Digital Shadowing" refers to the monitoring, tracking, and real-time synchronization of the virtual environment with data from real-time settings, such as Internet of Things (IoT) data.

The term "Factual Virtual World" refers to a digital environment that aims to accurately represent real-world places and objects. The objective of a Factual Virtual World is to replicate the Real World (Form) within the constraints (Abstraction) of the virtual medium, utilizing real-time synchronization (Digital Shadowing) of data from the Real World to represent the same in the Factual Virtual World with as much authenticity as possible.

The term "Instantiated Virtual World" refers to virtual worlds that are entirely imaginative and not necessarily related to the Real World. Examples include creating a new design of a component, changing the layout of a room for optimized working conditions, or simulating the operation of a machine under certain boundary conditions. These use cases are performed within a Virtual World setting and may not correspond to any real-world counterpart.

For example, it is possible that a user can access the computer-simulated environment via a user device, e.g., a virtual reality (VR) or augmented reality (AR) device. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The object of the invention is also achieved by a computer program product comprising machine readable instructions, that when executed by one or more processing units, cause the one or more processing units to perform the aforementioned method steps. The computer program product further comprises a storage unit communicatively coupled to the one or more processing units. The storage unit comprises a module stored in the form of machine-readable instructions executable by the one or more processing units. The module is configured to perform method steps as described above. The execution of the module may also be performed using co-processors such as Graphical Processing Unit (GPU), Field Programmable Gate Array (FPGA) or Neural Processing/Compute Engines.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: is a block diagram representation of a system for managing a plurality of virtual environments in a computer simulated environment, in accordance with one or more embodiments of the present invention;
- FIG 1B: is a block diagram representation of the apparatus for managing a plurality of virtual environments in a computer simulated environment, in accordance with one or more embodiments of the present invention;
- FIG 2: is a flowchart of a method for managing a plurality of virtual environments in a computer simulated environment, in accordance with one or more embodiments of the present invention;
- FIG 3: is a depiction of a relation between Real World, Factual Virtual World, and multiple Instantiated Virtual Worlds, in accordance with one or more embodiments of the present invention; and
- FIG 4: is a depiction of an exemplary embodiment of bread-crumb visualization of Instantiated Virtual World, in accordance with one or more embodiments of the present invention.
- FIG 5: is a depiction of exemplary embodiment of tree visualization of Instantiated Virtual World, in accordance with one or more embodiments of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments.

It may be evident that such embodiments may be practiced without these specific details.

The present invention discloses a novel approach for interoperability by managing lifecycle of an instantiated virtual world in a computer simulated environment. The present invention addresses this challenge by introducing a solution that creates an instantiated virtual world (IVW) based on a Factual Virtual world (FVW), the invention facilitates a framework for forming a relation between FVW and IVW.

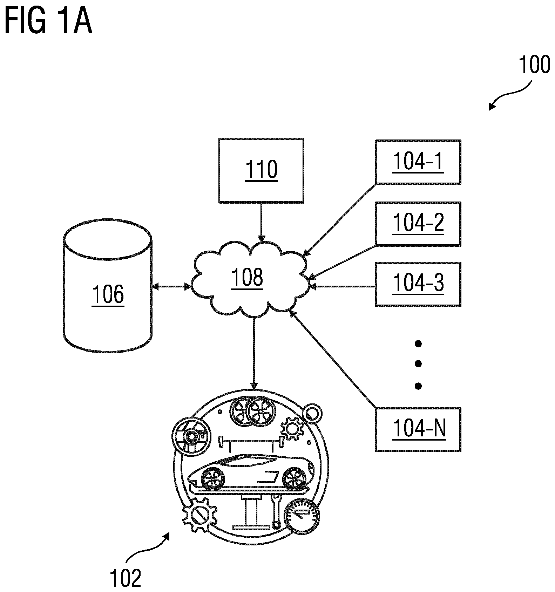

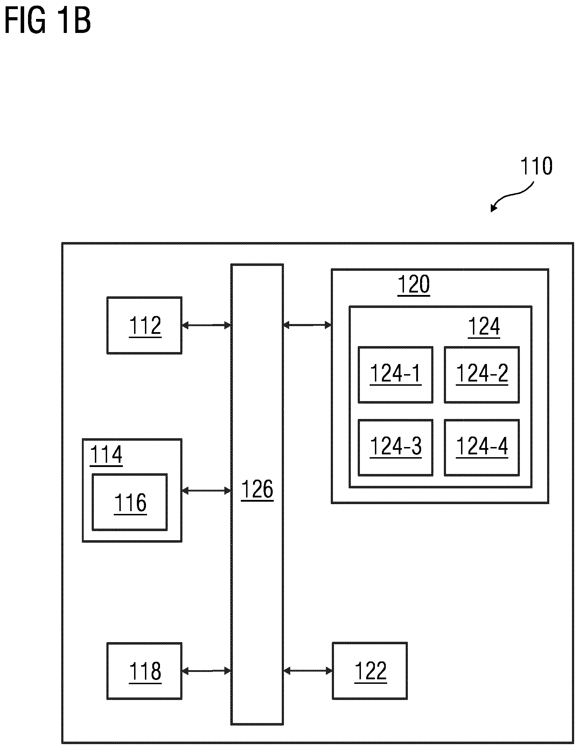

Referring to Fig. 1, illustrated is a system 100 for managing a plurality of virtual environments in a computer simulated environment, in accordance with one or more embodiments of the present invention. It may be appreciated that the system 100 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

FIG 1 is a block diagram of a system 100 for executing user intent by optimizing interaction steps using objective journey mapping in an industrial metaverse scenario, according to an embodiment of the present invention. The system 100 comprises a computer simulated environment 102, one or more user devices 104-1 to 104-N, and an apparatus 110 communicating over a network 108. The user terminal 104 includes a first user terminal 104-1 of a first user, a second user terminal 104-2 of a second user, a third user terminal 104-3 of a third user and so on. The term 'user' may be interchangeably construed as denoting the avatar within the computer-simulated environment 102. The computer simulated environment 102 is virtual representation of a real or physical world. It can be understood as a virtual world representing one or more elements/entities of the real-world such as assets, machines, robots, operators, workers, operators, objects, etc. The computer-simulated environment 108 is accessible by a user, i.e., it is accessible from the real/physical world. In particular, the computer-simulated environment 102 can be understood as a metaverse environment, a digital twin, a digital thread, autonomous systems, knowledge graphs, or a combination thereof. It is also possible to interact with the computer-simulated environment 102, i.e., to influence or use processes, components and/or functions in the computer-simulated environment 102. The user or the avatar may interact with the objects rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more animated scenes being rendered corresponding to the plurality of entities interacting in the industrial environment. The metaverse may comprise a plurality of computer-simulated components. The computer simulated components can for example be understood as a representation, in particular a 3D or virtual representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

Throughout the present disclosure, the terms similar to "user terminal" 104-1 and "one or more user terminals" 104-1, 104-2, ...104-N refers to any electronic device configured for capturing, acquiring, and transmitting data from a user to the apparatus. The user terminal may take various forms depending on the specific application of the system 100. In an example, the user terminal 104 includes one or more of a keyboard, a mouse, a touchscreen display, a microphone, a camera, or any other hardware component that enables the user to interact with the system 100. In another example, the user terminal 104-1 may comprise of multiple modes of acquisition of the data in addition to a user input and therefore the user devices 104-1, 104-2, ... 104-N may comprises of a combination of voice assistants, specialized input devices, data entry devices, touch screen interfaces, camera modules, digital cameras, surveillance cameras, aerial imaging devices, 3D imaging devices, wearable devices and the like. For the simplicity of this invention, we may refer to a single user terminal 104.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The network 108 is referred as a distributed network or communication network throughout the invention. The apparatus 110 may include a module for managing access control for a plurality of metaverses or digital twins interacting in a computer simulated collaborative environment over a distributed network.

Additionally, the system 100 comprises a cloud computing device configured for providing cloud services for managing access control for a plurality of user devices104-1, 104-2, ...104-N interacting in a computer simulated collaborative environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

FIG 1B is a block diagram of an exemplary apparatus 110 for efficiently rendering one or more scenes in a computer simulated environment, according to an embodiment of the present invention. In an exemplary embodiment, the apparatus 110 is communicatively coupled, using a distributed network 108, to one or more data acquisition devices 104-1 to 104-N, the knowledge database 106, and the apparatus 110 to render the computer simulated environment 102.

The apparatus 110 may be a personal computer, a laptop computer, a tablet, a server, a virtual machine, and the like. The apparatus 110 includes a processing unit 112, a storage unit 114 comprising a database 116, a bus 118, a memory 120 comprising a module 124, and an input/output I/O unit 122.

The processing unit 112 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 112 may also include embedded controllers, such as generic or programmable logic devices or arrays, application specific integrated circuits, single-chip computers, and the like.

The storage unit 114 comprises the database 116 for storing a plurality of knowledge graphs. The storage unit 114 and/or database 116 may be provided using various types of storage technologies, such as solid-state drives, hard disk drives, flash memory, and may be stored in various formats, such as relational databases, non-relational databases, flat files, spreadsheets, and extended markup files, etc.

The memory 120 may be non-transitory volatile memory and/or non-volatile memory. The memory 120 may be coupled for communication with the processing unit 112, such as being a computer-readable storage medium. The processing unit 112 may execute instructions and/or code stored in the memory 120. A variety of computer-readable instructions may be stored in and accessed from the memory 120. The memory 120 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 120 includes the module 124 stored in the form of machine-readable instructions on any of the above-mentioned storage media and may be in communication to and executed by the processing unit 112. When the machine-readable instructions are executed by the processing unit 112, the module 124 causes the processing unit 112 to efficiently render one or more scenes in a computer simulated environment.

The module 124 further comprises a factual virtual world (FVW) generation module 124-1, a Instantiated Virtual World (IVW) generation module 124-2, a relation control module 124-3, and a display module 124-4.

The FVW module 124-1 comprises of generating a Factual Virtual World (FVW) that faithfully mirrors real-world objects in real-time through digital shadowing. This ensures an accurate and up-to-date digital reflection of the Real World (RW).

The IVW module 124-2 comprises of generating an Instantiated Virtual World (IVW) based on the FVW at a specific instant of time. The module may generate a plurality of The IVW is capable of being modified, simulated, archived, and deleted independent of the FVW. Each of the IVW is an instance with a specific objective and a specific time period. The IVW module may be configured to generate a predefined templatized Instantiated Virtual Worlds (IVWs) derived from user profiling. The processing unit 112 utilizes the Factual Virtual World (FVW) and a user personas stored in the knowledge database 106 to generate persona-specific IVWs. The plurality of IVWs may be tailored to individual user personas such as maintenance personnel, incorporate defined interoperable blocks delineating accessible and modifiable areas within the virtual environment. Through user interactions within the IVWs, any alterations made to the real-world setting are promptly reflected in real-time updates to the FVW and subsequently transmitted back to the IVWs, thereby obscuring the demarcation between actual and virtual realms.

Concerning lifecycle stages, security levels, and access levels, the IVW generation module 124-2 facilitates the creation of standardized IVWs corresponding to various lifecycle phases, including design, production, maintenance, and operations. These IVWs, categorized into zone-specific entities, grant access to authorized personas in alignment with their prescribed roles and permissions. Analogous to delineating access privileges within physical premises, users are granted designated access levels to their respective virtual environments. All modifications effected within the real-world environment are promptly mirrored onto associated IVWs, ensuring the perpetuation of real-time updates for users interacting within these virtual spheres.

The relation control module 124-3 is instrumental in delineating and managing the dynamic relationship between the Factual Virtual World (FVW) and a plurality of Instantiated Virtual Worlds (IVWs), as elaborated upon in the present invention. It operates by discerning and defining the interplay between the FVW, which serves as the foundational real-time digital reflection of the physical world, and the IVWs, which represent tailored, user-specific virtual environments derived from the FVW. Specifically, the relation control module 124-3 is configured to ensures that each IVW, whether designed for maintenance personnel or aligned with production phases, maintains a synchronized connection with the FVW, such that the FVW is updated from the real world, based on the interoperable blocks that is getting shared, and the IVW also gets updated based on the type of update. There are two types of updates: auto update, wherein the updates happen from the Factual World to the Instantiated Virtual World, and the user initiated update, wherein the user is allowed to generate an update from a first IVW to a second IVW.

Furthermore, the relation control module 124-3 determines resolution of conflicts that may arise during real-time updates between the FVW and IVWs, as delineated in the preceding discourse. The system employs mechanisms to identify and resolve discrepancies that may arise during real-time updates between the Factual Virtual World (FVW) and Instantiated Virtual Worlds (IVWs), ensuring the integrity and congruence of exchanged data. As updates occur, any conflicts are promptly detected and presented to users for review, enabling them to accept, reject, or revert changes as deemed appropriate. This process facilitates the timely resolution of conflicts, thereby reinforcing the preservation of data integrity and congruity within the virtual environment.

The display module 124-4 is configured to display on a user interface within a computer-simulated environment using various visualization methods. These methods may range from 3D renderings to augmented reality, and may be selected based on context and user requirements. The user interface serves as an interactive platform for users to navigate, manipulate objects, and access real-time data updates. For the purpose of the present invention, there are two forms of visualizations methods, namely, a breadcrumb visualization and a tree visualization.

Breadcrumb visualization in a virtual environment serves as a navigational aid for users to understand their current location within the virtual space. This visualization method is particularly useful in scenarios where there are multiple entry points into the virtual world. By presenting a trail of breadcrumbs, users can easily discern their spatial context within the environment. Each breadcrumb represents a step or entry point taken by the user, providing a visual cue of their journey through the virtual space. As users move between different areas or worlds within the virtual environment, the breadcrumb trail dynamically updates to reflect their path. This fosters context awareness, allowing users to navigate with confidence and clarity. Additionally, alongside breadcrumb visualization, a mini-map feature may be incorporated into the user interface to provide situational awareness, further enhancing the user's understanding of their surroundings within the virtual environment. Together, breadcrumb visualization and the mini map contribute to an intuitive and immersive user experience, facilitating seamless navigation and exploration of the virtual world.

A tree structure visualization is a graphical representation that organizes data in a hierarchical manner, resembling the branching structure of a tree. The tree structure visualization represents the hierarchy of instantiated virtual worlds (IVWs) or the organization of virtual objects within a virtual space. Each node in the tree may represent a specific IVW or virtual object, with parent-child relationships indicating dependencies or associations between them. This visualization method facilitates the management and navigation of virtual environments, allowing users to easily explore and interact with the virtual space in a structured manner.

The processing unit 112 is configured for performing all the functionality of the module 116. The processing unit 112 is configured to receiving visual data from one or more data acquisition devices configured to acquire data pertaining to one or more entities interacting in an industrial environment. The processing unit 112 is configured to identify a real-world scene from the industrial environment in real-time. Herein, the real-world scene is identified using one or more machine learning models on the received visual data. The processing unit 112 is configured to fetch a preconfigured animated scene from a knowledge base based on a comparison with the identified real-world scene. Herein, the knowledge base comprises a plurality of preconfigured animated scenes derived from a knowledge graph repository comprising information pertaining to one or more real-world scenes in the industrial environment. The processing unit 112 is configured to render the preconfigured animated scene fetched from the knowledge base in the computer simulated environment. Herein, the rendered preconfigured animated scene is in synchronization with the identified real-world scene in real-time. The processing unit 112 is configured to detect a deviation in the real-world scene when compared with the preconfigured animated scene being rendered in the computer simulated environment. The processing unit 112 is configured to render the real-world scene in the computer simulated environment in response to the detected deviation.

The input unit 122 may provide ports to receive input from input devices such as keypad, touch-sensitive display, camera (such as a camera receiving gesture-based inputs), etc. capable of receiving set of requirements for generating scenes of a particular area in a factory floor, factory floor models details for storage in the first knowledge graph, worker behavior model details for storage in the second knowledge graph etc. The display unit 142 may provide ports to output data via output device with a graphical user interface for displaying one or more scenes in the computer simulated virtual environment. The bus 118 acts as interconnect between the processing unit 112, the storage unit 114, the memory 120, the input unit 122, and the display unit 142.

Those of ordinary skilled in the art will appreciate that the hardware depicted in FIG 1B may vary for implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

The present invention is not limited to a particular computer system platform, processing unit, operating system, or network. One or more aspects of the present invention is distributed among one or more computer systems, for example, servers configured to provide one or more services to one or more client computers, or to perform a complete task in a distributed system. For example, one or more aspects of the present invention is performed on a client-server system that includes components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

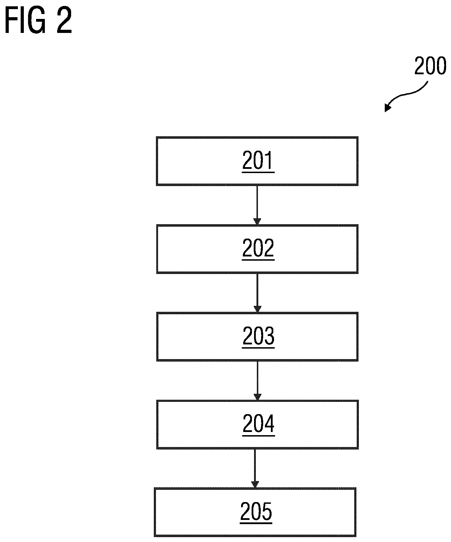

Referring now to FIG 2, illustrated is a flowchart of a method (as represented by reference numeral 200) for managing a plurality of virtual environments in a computer simulated environment. The method according to the present invention establishes a relationship between the Factual Virtual World (FVW) and the Instantiated Virtual World (IVW), forming the foundational framework of the invention. The FVW, analogous to the Real World (RW), is a persistent digital representation that mirrors real-world data and phenomena; it is not subject to creation or deletion in the conventional sense, as it serves as a reflection of actual real-world conditions. Notwithstanding, the FVW can be subject to creation, modification, updates, simulation, archiving, and deletion for the purpose of accurately representing changes in the Real World.

The invention is directed towards facilitating the interoperability of data through a system and method devised to manage the lifecycle of the Instantiated Virtual World (IVW) throughout the lifecycle of a product, infrastructure, or system. This includes, but is not limited to, the creation, modification, updating, simulation, archiving, and deletion of IVWs in alignment with their corresponding real-world counterparts.

Referring to FIGS 1B and FIG 2 in combination, the various steps of the method 200 as described hereinafter are executed in the system 100, or specifically in the apparatus 110 of the system 100. It may be appreciated that although the method 200 is illustrated and described as a sequence of steps, it may be contemplated that various embodiments of the method 200 may be performed in any order or a combination and need not include all of the illustrated steps.

In embodiments of the present invention, at step 201, the method 200 includes generating, by a processing unit, a Factual Virtual World (FVW) configured to accurately represent real-world objects, synchronized in real-time with the Real World (RW) using digital shadowing.

In embodiments of the present invention, at step 202, the method includes generating an Instantiated Virtual World (IVW) based on the FVW at a specific instant of time, wherein the IVW is capable of being modified, simulated, archived, and deleted independent of the FVW. This process involves utilizing digital shadowing to ensure that the FVW is a real-time reflection of the RW, thereby maintaining an accurate and current digital representation. Subsequently, the IVW is instantiated from this synchronized FVW, enabling dynamic manipulation of the IVW without impacting the original FVW, thereby providing flexibility and autonomy in the management of virtual environments.

In embodiments of the present invention, at step 203, the method 200 includes controlling a relationship between the FVW and multiple IVWs, wherein the FVW mimics one or more properties of the RW, and each IVW is an instance with a specific objective and a specific time period. The relationship management ensures that the FVW serves as a persistent and accurate digital reflection of the RW, capturing its properties and dynamics through real-time synchronization. Each IVW, derived from this FVW, is tailored to achieve particular objectives, such as simulations, modifications, or analyses, and is operational within defined temporal constraints. The method allows for the seamless integration and interaction between the FVW and various IVWs, maintaining the integrity and relevance of the data while enabling targeted and time-bound virtual experiments or modifications within the IVWs.

In embodiments of the present invention, at step 204, the method 200 includes ensuring data interoperability between the FVW and IVWs, wherein the data interoperability is associated with flow of data being unidirectional, and wherein the data interoperability further comprises of a control over sharing and modification of IVWs based on a specific information. The unidirectional flow ensures that data is transmitted in a single direction between the FVW and the IVWs, thereby maintaining data integrity and consistency. Additionally, the data interoperability comprises control mechanisms over the sharing and modification of IVWs based on specific information. The control mechanisms regulate the conditions under which data within the IVWs can be shared or modified, ensuring that such actions are conducted in accordance with predetermined criteria or permissions. The structured approach to data interoperability facilitates the accurate and secure exchange of information, thereby optimizing the functionality and reliability of the virtual environments.

In embodiments of the present invention, at step 205, the method 200 displaying the each IVW and FVW on a user interface in the computer simulated environment using at least one of a visualization method of a plurality of visualization method. In the method described, Individual Virtual Worlds (IVWs) and the Factual Virtual World (FVW) are displayed on a user interface within a computer-simulated environment using at least one visualization method from a range of available options. The user interface serves as an interactive platform where users can view and interact with these virtual worlds. IVWs are specific digital representations for particular tasks or scenarios, while the FVW mirrors real-world conditions and data. The visualization methods, which may include 3D renderings, 2D maps, augmented reality (AR), virtual reality (VR), graphical overlays, and simulation animations, are selected based on the context and user requirements. These methods render the IVWs and FVW on the user interface, allowing users to navigate through the virtual environment, manipulate objects, and access real-time data updates. For example, a maintenance engineer could use a 3D model to virtually inspect a factory, monitor real-time data through graphical overlays, and run simulations in an IVW to test machine settings, thereby managing and optimizing factory operations through an intuitive and informative interface.

Therefore, the proposed solution provides a system and method for organizing and managing virtual worlds. The Factual Virtual World (FVW) is a replica of the Real World (RW), while Individual Virtual Worlds (IVWs) are created through imagination, without the physical constraints of reality. This invention provides a practical approach for creating and organizing these virtual worlds as instances within an Instantiated Multiverse (IMV), each instance being time-tagged, organized, shared, and archived according to its specific purpose and lifecycle stage.

Unlike the speculative concept of a multiverse, which posits the existence of multiple universes or separate realms of reality, this invention focuses on the creation and management of multiple VWs. The method includes creating instances of VWs for specific purposes within the IMV, ensuring that each instance is appropriately tagged, organized, shared, and archived.

Information within this system can be shared in its entirety to create a new instance or partially, with only specific segments being shared and updated in other IVWs. An FVW transitions to an IVW when it ceases to receive real-time updates. Multiple entry points from the FVW to the IVW are possible, facilitating navigation between worlds, akin to teleportation. For example, within a factual VW factory, there can be various entry points to an IVW that present new conceptual models or solve real-world maintenance issues. It is recognized that a fully factual VW is impractical, as it is challenging to precisely replicate the RW instantly. Instead, the FVW abstracts certain elements digitally to represent the RW. Ownership of virtual environment within the FVW corresponds to real-world ownership, while purchasing land is feasible solely within the IVW.

This invention addresses interoperability challenges by providing a system and method for organizing the lifecycle of the IVW, thereby facilitating data and content sharing across multiple platforms. This method enhances the management of assets in the virtual world environment, addressing the current limitations of metaverse interoperability.

For instance, consider a factory digital twin within a metaverse, serving as a persistent VW in a multiuser environment. The FVW mirrors the real-world factory at any lifecycle stage-be it conceptual, design, or engineering. If the real factory is in its initial construction phase, an initial IVW instance can be created to optimize factory layout for production targets. Another IVW instance might focus on adding machines during subsequent expansion phases. Both instances utilize the same asset information from the FVW, building imaginative IVWs atop it. The data is shared, with access rights granted to specific users, thus enabling efficient data and content interoperability within the virtual world environment.

The system facilitates the creation and archiving of IVWs, allowing for the selection and visual connection of block instances to ease visualization and modification. The interoperability of data blocks between IVWs enhances the flexibility and functionality of the virtual environments, providing a robust framework for managing digital representations of real-world scenarios.

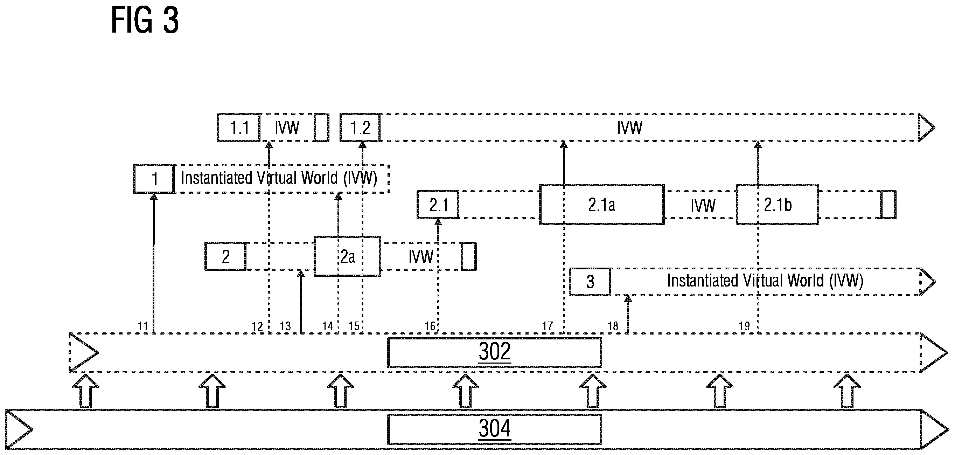

Illustrated in FIG 3 is a depiction of a relation between Real World 304, Factual Virtual World 302, and multiple Instantiated Virtual Worlds, as outlined in one or more embodiments of the present invention. The figure illustrates the relationship framework between the Real World (RW) 304, Factual Virtual World (FVW) 302 and multiple Instantiated Virtual Worlds (IVWs), plotted against time (T). RW 304 is represented as a continuous arrow at the bottom of the figure, the RW is the physical reality that persists over time. FVW 302 is depicted above the RW, the FVW 302 is a digital representation that mirrors the RW, continuously synchronized in real time through digital shadowing. This continuous synchronization is indicated by an unbroken arrow extending over time. Instantiated Virtual World 1 (IVW) is created at time T1 for a specific objective, IVW 1 persists for a defined duration before being archived, as indicated by a rectangular block at its end. IVW 1.1 instance is initiated at time T2 and similarly archived after a certain period, as shown by its corresponding rectangular block. IVW 1.2 is initiated at time T5, IVW 1.2 receives a block of data from instance 2.1a at time T6 and another block from instance 2.1b at time T9. IVW 1.2 is depicted as ongoing, indicated by an arrow continuing beyond the data points. The blocks (e.g., 2.1a and 2.1b) represent sets of data that can be shared across different virtual worlds as interoperable assets. For instance, data from a modified room in instance 2.1a can be transferred to IVW 1.2, where the spatial information of the room in IVW 1.2 is replaced by the data from 2.1a, while the rest of IVW 1.2 retains its original information. Here, 2.1a is considered a local instance, and 2.1 is a global instance.

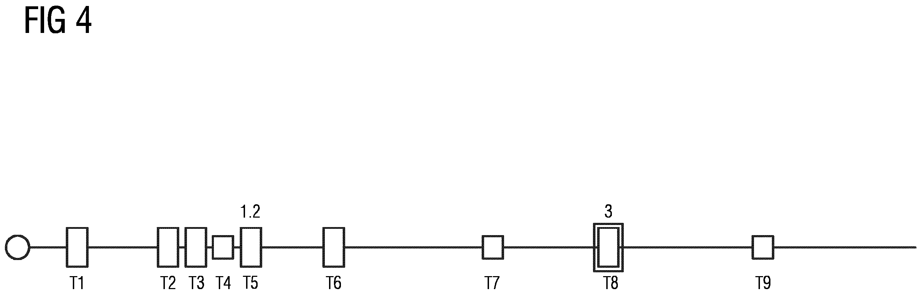

FIG 4 illustrates an exemplary embodiment of is a depiction of an exemplary embodiment of bread-crumb visualization of Instantiated Virtual World, in accordance with one or more embodiments of the present invention. The user interface (UI) for breadcrumb visualization is designed to provide users with contextual awareness within multiple virtual worlds (VWs). Given the numerous entry points into these worlds, this system clearly indicates the user's position and context. The breadcrumb visualization, represented as a series of clickable links or highlighted elements, shows the user's journey through different instances of VWs. Each "crumb" represents a specific instance or point in the VW hierarchy, helping users understand their navigation path, quickly return to previous instances, and navigate efficiently. For example, if a user navigates from the foundational virtual world (FVW) to a particular individual virtual world (IVW), the breadcrumb might display as: Home (FWV) > Factory Layout (IVW1) > Production Optimization (IVW2). Additionally, a mini map within the virtual world UI enhances situational awareness by providing a top-down or simplified view of the user's current location, showing key landmarks, user position, and important areas. This visual representation helps users orient themselves, plan movements, and avoid getting lost. By integrating breadcrumb visualization with a mini map, the system offers comprehensive contextual and situational awareness, ensuring users can maintain context, navigate effectively, and manage complex virtual environments seamlessly.

The breadcrumb visualization shows the present IVW as IVW 3, distinguished by a highlight line over its rectangular block. Active instances are represented by black squares, whereas archived instances are visualized as grey rectangles. This method of visualization allows users to easily identify their current position within the virtual worlds and switch between instances in real-time. In the figure, the sequence of blocks from T1 to T9 represents various instances of the virtual world, with grey rectangles (T2, T3, T4, T6) indicating archived instances and black squares (T1, T5, T7, T9) indicating active instances. IVW 3 (T8) is highlighted to show the current active instance. This visualization technique aids in contextual and situational awareness, enabling efficient navigation and management within the virtual environment.

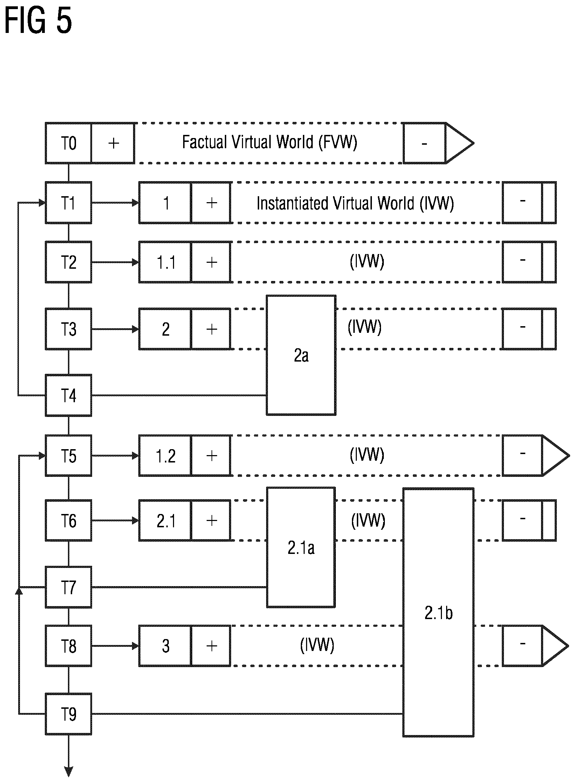

FIG 5 is a depiction of exemplary embodiment of tree visualization of Instantiated Virtual World, in accordance with one or more embodiments of the present invention. The tree structure visualisation represents a user interface that displays the hierarchy of instances based on their time tags, similar to versioning in CAD data. Instances are time-tagged and can be archived by pressing a minus button upon completion. Data transfer between virtual worlds is unidirectional, facilitating control over time-tagged data, unlike bidirectional transfer which lacks control. The Foundational Virtual World (FVW) progresses in real-time like reality, but in the IVW, users can navigate through time, linking past and present data within the instantiated world.

The advantage of this invention lies in its system for interoperability, enabling the creation of IVWs from the FVW or other IVWs. This system encompasses lifecycle stages including creation, modification, organization, and archiving, with a unique user interface for managing these processes. The breadcrumb visualization aids in identifying the current IVW. The invention is the first to conceptualize a virtual world system with the FVW as the base and IVWs as instances. Actions like designing, simulation, and configuring are performed in instances within the VW. An IVW allows time navigation, unlike an FVW, where each IVW instance can be shared with specific personas with designated access rights. The entry point into the VW can be through the FVW, leading to the IVW, or directly into the required instance. Syncing between the Real World (RW) and FVW is real-time, while syncing between FVW and IVW is optional and only forward sync is possible, preventing backward or bidirectional syncing.

Moreover, the benefit of this invention lies in organizing virtual world (VW) information, which avoids the need to recreate VWs (such as a factory) repeatedly for different use cases and prevents the storage of these as separate metaverses, thus reducing creation and recreation costs. Information flows between VWs through connections, which are instances created at specific times for particular use cases. Different instances can serve different purposes but share the same information if created simultaneously, greatly enhancing the efficiency of information transfer between individual metaverses (IMVs). Security is managed by sharing individual virtual worlds (IVWs) with respective personas, establishing access rights for specific information. For instance, access to new machine designs in a factory VW can be restricted to only a few relevant individuals. Lastly, personalization is achieved by replicating the real world in the foundational virtual world (FVW) and tailoring IVWs to individual contexts, enabling personas to quickly equip themselves with necessary tools and customize spaces for effective work within the VW.

While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of references

- 100: a system
- 102: a computer simulated environment
- 104-1 to 104-N: user devices
- 106: a knowledge database
- 108: a communication network
- 110: an apparatus
- 112: processing unit
- 114: a storage unit
- 116: a database
- 118: a bus
- 120: a memory unit
- 122: an input unit
- 124: a module
- 124-1: a Factual Virtual World generation module
- 124-2: a Instantiated Virtual World generation module
- 124-3: a relation control module
- 124-4: a display module
- 200: method
- 300: a relation between Real World, Factual Virtual World, and multiple Instantiated Virtual Worlds.
- 302: Real world
- 304: Factual Virtual World
- 400: bread-crumb visualization of Instantiated Virtual World (IVW)
- 500: tree visualization of Instantiated Virtual World

## Claims

1. A computer-implemented method for managing a plurality of virtual environments in a computer simulated environment, the method comprising:
generating, by a processing unit, a Factual Virtual World (FVW) configured to accurately represent real-world objects, synchronized in real-time with the Real World (RW) using digital shadowing;
generating, by a processing unit, an Instantiated Virtual World (IVW) based on the FVW at a specific instant of time, wherein the IVW is capable of being modified, simulated, archived, and deleted independent of the FVW;
controlling, by a processing unit, a relationship between the FVW and a plurality of. IVWs, wherein the FVW mimics one or more properties of the RW, and each IVW is an instance with a specific objective and a specific time period; and
displaying, by a processing unit, the each IVW and FVW on a user interface in the computer simulated environment using at least one of a visualization method of a plurality of visualization method.

2. The method of claim 1, wherein the digital shadowing of the FVW is achieved using Internet of Things (IoT) data from a plurality of sensors to ensure real-time synchronization with the RW.

3. The method according to any of the claims 1 or 2,
wherein the plurality of visualization method comprises:
implementing a breadcrumb visualization method that highlights each of an active IVW and provides a visual representation of archived IVW of the plurality of the IVW, wherein the breadcrumb visualization method uses a combination of highlight lines and rectangular blocks to indicate active and archived IVWs, respectively.

4. The method according to any of the claims 1 to 3, wherein the plurality of visualization method further comprises:
a tree structure visualization method configured to show the hierarchical formation of IVWs based on their creation times, wherein the tree structure visualization method provides a chronological hierarchy of IVWs, allowing users to navigate through different instances based on their creation times.

5. The method according to any of the claims 1 to 4, the method further comprises: ensuring data interoperability between the FVW and IVWs, wherein the data interoperability is associated with flow of data being unidirectional, and wherein the data interoperability further comprises of a control over sharing and modification of IVWs based on a specific information.

6. The method according to any of the claims 1 to 5, the method further comprising: **characterizing, by** the processing unit, each IVW with time metadata configured to organize and manage their lifecycle; and wherein the user interface includes a versioning system for IVWs, tagging each instance with a version number and a time stamp to facilitate tracking and management of different virtual scenarios.

7. The method according to any of the claims 1 to 6, wherein data flow being unidirectional is the flow of data from the FVW reflected in the IVWs, the data flow being a traceability chain of events comprising a plurality of changes from the FVW to monitor changes made by various personas for the IVW.

8. The method according to any of the claims 1 to 7, wherein the FVW and IVWs can be accessed through multiple entry points, allowing users to enter the virtual environment either through the FVW or directly into a specific IVW.

9. The method according to any of the claims 1 to 8, wherein each IVW can be archived upon completion of its objective, with archived instances remain accessible for future reference or reactivation.

10. The method according to any of the claims 1 to 9, wherein the user interface (UI) featuring breadcrumb visualization comprises of a mini map integrated into the UI for spatial awareness and a navigation path facilitating navigation across multiple entry points.

11. The method according to any of the claims 1 to 10, wherein in a case conflict of real-time updates between the FVW and IVWs, conflicts are identified and flagged for user input.

12. The method according to any of the claims 1 to 11, wherein each IVW is one of a predefined templatized Individual Virtual Worlds (IVWs) created based on lifecycle stages wherein, each IVW corresponding to a specific lifecycle stage is partitioned into zones.

13. An apparatus for managing a plurality of virtual environments, the apparatus comprising:
one or more processing units; and
a memory unit communicatively coupled to the one or more processing units, wherein the memory unit comprises a module stored in the form of machine-readable instructions executable by the one or more processing units, wherein the module is configured to perform method steps according to any of the claims 1 to 12.

14. A system for managing plurality of virtual environments, the system comprising:
a computer simulated environment hosting a plurality of virtual environments accessible to one or more users via at least one user interface; and
an apparatus according to claim 13, communicatively coupled to the at least one user interface, wherein the apparatus is configured for managing the computer simulated environments used for testing of autonomous vehicles based on inputs received from the at least one user interface, according to any of the method claims 1 to 12.

15. A computer-program product having machine-readable instructions stored therein, which when executed by one or more processing units, cause the processing units to perform a method according to any of the claims 1 to 12.
